(19) **Europäisches Patentamt / European Patent Office / Office européen des brevets**

(11) **EP 3 040 774 B1**

(12) **EUROPEAN PATENT SPECIFICATION**

(45) Date of publication and mention
of the grant of the patent:
**18.04.2018 Bulletin 2018/16**

(51) Int Cl.:
***G06K 19/06*** (2006.01)     ***H04N 5/84*** (2006.01)
***G03B 27/00*** (2006.01)

(21) Application number: **14460137.4**

(22) Date of filing: **31.12.2014**

(54) **Method for storing data**

Verfahren zur Datenspeicherung

Procédé d'enregistrement de données

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.07.2016 Bulletin 2016/27**

(73) Proprietor: **CMC Spólka z ograniczona
odpowiedzialnoscia
05-090 Sekocin Stary (PL)**

(72) Inventor: **Michalak, Tomasz Maciej
01-603 Warszawa (PL)**

(74) Representative: **Marcinska-Porzuc, Aleksandra
Kancelaria Patentowa
Ul. J. Slowackiego 5/149
01-592 Warszawa (PL)**

(56) References cited:
**WO-A1-2004/114655     WO-A1-2013/137868
US-A1- 2010 295 967**

- **CHRISTOPH VOGES ET AL: "Technology and
Applications of Digital Data Storage on
Microfilm", JOURNAL OF IMAGING SCIENCE
AND TECHNOLOGY, SPIE - THE
INTERNATIONAL SOCIETY FOR OPTICAL
ENGINEERING, US, vol. 53, no. 6, 1 November
2009 (2009-11-01), pages 60505-1, XP008148157,
ISSN: 1062-3701, DOI:
10.2352/J.IMAGINGSCI.TECHNOL.2009.53.6.060
505 [retrieved on 2009-01-01]**

**Description**

The present invention relates to a method for storing data, in particular in applications requiring long-term storage of data and archiving data for many years.

There are a lot of methods of storing data for long-term archiving. An optical image, coming for instance from a film camera, can be recorded on a photographic emulsion that is a light-sensitive material obtained by precipitation of fine crystals of silver halides - most frequently bromides, chlorides, iodides - in an aqueous gelatin solution which undergoes a complicated process of ripening. The properties of a photographic emulsion are related to the size, shape, and defects of the crystal structure of the grains and their number. These parameters, in turn, affect the photosensitivity, color sensitivity, contrast, granularity, and the resolving power of the photographic material. A photographic film is commonly known photographic material for registering images. It consists of several layers and comprises a photosensitive layer, a protective layer and a non-flammable destruction-resistant polyester substrate. Such a film, when stored in stable climatic conditions, may survive several dozens of years, and the tests of the photographic films manufacturers define the lifetime of the film even for over 100 years without losing its content. This is confirmed by the condition of movies from the beginning of the XXth century. When stored properly, they can be reproduced today without significant loss of quality. However, the aging process of the photographic film leads to a change in the structure of the silver molecules, thus causing a degradation of the recorded data. In case of black and white films this process is many times slower than in color films, where the photosensitive layer contains three levels of emulsion sensitive to three different colors. Therefore, the preferred solution enabling long-term data storage is based on the use of the black and white photographic film.

Furthermore, methods are known for registering and archiving various documents on microfilms, that are commonly used for example in large libraries, where microfilms or microfiches are used for contrast recording with size reduction of line-type image documents, such as drawings, text prints, schemes, and plans. Microfilms have usually very fine grain of the photosensitive material, which ensures their high resolution and contrast; however, the adverse effect is the low film speed, and, as an additional disadvantage, the lack of halftones in contrasty areas.

Moreover, data in particular such as documents, audio recordings, and movies, at present may be effectively stored and archived in digital form, this being practiced commonly by individuals as well as by big organizations. However, if there is a need for storing data for many years, there are no verified methods of storing data in the digital form. Existing methods of storing data on electronic media do not guarantee the correct reading out the data after many years, or the cost of storing is very high. For example, even the CD or DVD discs coming from the same manufacturer differ significantly from each other in terms of durability. Apart from many advantages of using such media, the suitability of the discs is reduced by three important factors: too intensive light impairs the organic dye, the metallic layer becomes oxidized, and the polycarbonate does not withstand high temperatures. On the other hand, hard disks are not resistant to high temperatures and humidity, and additionally do not tolerate shocks and impacts. The archiving with the use of hard disks is hindered also by other factors, as for example possible corrosion of the connections. At the same time flash disks stop to operate after some number of writing-erasing cycles, and even if one does not use such a disk at all - it will loose its charge within several years. Generally, it is accepted that optical media have an average lifetime up to 5 years, hard disks, flash memories, and SSD disks up to 10 years, and magnetic tapes up to 20 years. Anyway, all these media require special interfaces for reading the stored data.

Thus, none of the presently implemented archiving techniques satisfies the requirements for the everlasting archiving, i.e., for the period of at least several tens of years. In order to ensure the possibility of reading out the recorded data, it is necessary to copy the data onto newer media in lifetime corresponding cycles of a particular media type, this being time-consuming and raises the archiving costs. Existing methods of storing data in analog form, such as negatives, photographs, prints etc., allow for storing data in a form that is suitable to read the data later on, however, this way of storing requires large storage area for the archives. Moreover, considering for example digital photographs that are printed to analog media and scanned again, as well as in case of many other types of data, re-digitalization leads to a loss of quality. Storing data for the purpose of everlasting archiving utilizes all popular media, such as 8 mm and 16 mm microfilms, as well as 35 mm, 70 mm, and 105 mm film strips. Therefore, the film strip became the main medium used for everlasting archiving due to its physical properties, ensuring long-term storing without a loss of quality of the stored data. Respective documents are photographed onto subsequent frames of the strip, and then the film is developed in a photochemical process. Copying is carried out with the use of photographic techniques.

Also, methods are known enabling to record data in digital form in film strips containing a magnetic layer. For example, in the U.S. patent No US5751505A a method is disclosed for recording data onto a plurality of tracks extending along the tape, with segment lengths corresponding to frame lengths, the data being registered in a form of blocks having starting code portions defining the beginning of a particular block. At the end of each block an end code portion is placed defining the end of the block. The blocks are divided into fields, the initial field having a 6-bit structure, then a 12-bit structure is placed defining the data type, and a parity bit is added additionally toward the end of the block.

Similarly, in the U.S. patent No US6229659 related to a magnetic tape, individual tracks are disclosed divided into segments and blocks, that are equipped with headers for synchronizing individual data as well as for searching through a portion of magnetic tape in which particular data is stored.

However, solutions known from the state of the art relate to methods for storing data onto magnetic tapes or photographic tapes containing a magnetic layer and usually focus on the maximum possible data packing on the tape, using various compression and coding systems. For example, in the U.S. patent application No US2010/0180180 a method is disclosed for writing data onto a magnetic tape in a multi-track form with interleave and error correction coding (ECC), where data are specifically encoded.

Another prior art solution is known from document WO2004/114655.

Also, attempts have been taken to develop a digital everlasting archiving method, wherein materials are scanned and then written onto a film strip in a discrete form, by means of a laser imagesetter. It can be seen only in very large magnification that individual pixels are exposed. For a naked eye, the image looks as an analog one. The reading is performed by means of either a film scanner or readers, for example like these used for reading microfilms.

Also, analog-digital hybrid techniques are being developed allowing for writing data in an analog form along with an additional digital information, this being implemented to reduce the amount of used information medium. An example of such a technique is the technology developed by Point.360 Digital Film Labs. In this technology a colored image is written in a black and white form along with the information about the color.

Moreover, storing digital data on a film strip is connected with converting the digital data representation having a form of a digital image to an analog form. On the contrary to a digital image, containing a particular, countable number of points, the resolution of photosensitive materials is difficult to define and express as a numerical value. An image on the film strip, created by irregularly distributed silver halide crystals, giving a specific impression of grain and optical density, gives no simple grain-pixel assignment. Both the writing and reading processes have risk of ambiguous image representation. Therefore, no method has been developed for storing data on a film strip with the aim of reaching a possibly long storage period without significant degradation of data, and at present no technologies are offered in the market for archiving and storing data in a digital form on a film strip.

Therefore, the object of this invention is to provide a method for storing data in a digital form on a film strip. Another object of the invention is to provide a method for storing data, which allows for long-term and simple data archiving on a film strip without incurring high economic costs for the storage. Also, the method takes into account the fact that the medium, on which the data is stored, undergoes an aging process and, by means of the proposed solution, it minimizes and compensates this effect. Furthermore, the object of the invention is to ensure the possibility of reading data from the data medium even in the case of partial damage of the data medium.

According to the invention, a method for storing data on a film strip includes a step of inserting a digital data representation into an imaging region on every film frame by means of exposing every film frame, wherein the digital data representation, as a set of pixels, is fixed on the film strip as regions of irregularly distributed silver halide crystals, the digital data representation being obtained by coding the data with the use of predefined patterns, and is characterized in that the digital data representation is transformed to a graphic form in which individual pixels are easily associated with regions of silver halide crystals of the film strip, creating a parameterized imaging format in a form of a matrix with at least two parameters affecting the number of digital data representations that can be written in a single film frame. Said transformation comprises a step of defining a resolution parameter defining the dimensions of the data fields, being portions of the film frame that are visible in imaging devices, and a step of defining a number of gray levels. Then, the digital data representation is divided into blocks, and the blocks are filled in, asymmetrically, with useful data and redundant data, creating a code combination, by which an asymmetrical exposure shape is obtained, and sequentially, the data blocks of such a shape are exposed on subsequent film frames of the film strip in the imaging region. The film strip may have different resolution parameters and speeds. The redundant data are used in an error correction system for verifying the useful data, by computing a verification value that also is placed onto the film strip, thus making it possible to check the correctness of the data consistency during writing and reading thereof. Moreover, the asymmetrical shape of the data block is used for synchronizing respective imaging lines while writing and reading the digital data representation on the film strip. Additionally, preferably, metadata, additional data, and data assisting the exposure and the photochemical process are placed on the film strip beyond the imaging region.

In order to preserve the data redundancy, preferably, a known ECC coding is used.

Preferably, data that allows reading the parameters, which were used to write the data, without imaging devices is also exposed in each film frame beyond the imaging region. A set of metadata related to data written in the imaging region is exposed on a film frame above the imaging region of the film strip.

Preferably, the set of metadata comprises a crossmark, a color scale, and a positive/negative marker.

The additional set of data is exposed preferably on both sides of the imaging region of the film strip.

Preferably, the additional set of data comprises frame resolution, data block size, data block density, ECC correction, ECC block size, and number of the redundant bits, filename, and an information field.

The set of data assisting the exposure and the photochemical process is exposed in the film frame preferably below the imaging region of the film strip or alternatively on both sides of the imaging region of the film strip.

The set of data assisting the exposure and the photochemical process comprises markers, data explicitly identifying the film frame, and a gray scale that is, preferably, located below the imaging region in a form of two stripes, each having twenty-one regions of different gray levels, in order to calibrate the photochemical process during developing the photographic material. Preferably, the imaging region of the film strip is parameterized and adapted to technical capabilities of the registering devices.

The smallest data block is a block of four pixels, where three pixels are the data medium and the fourth one is the medium verifying the data.

Preferably, the pixels are grouped into data blocks in which the number of pixels in a row is equal to the number of pixels located in a column.

According to the method of this invention it is possible to write many times more information within a single frame of the photosensitive material than in an analog form. Due to the fact that the developed method for storing the digital data representation involves the redundant data, it is possible to read the contents of the strip even in the case of a partial loss of the medium, e.g., due to a damage of the film strip. This type of recording allows reading the data without losing information. Simultaneously, for many types of data, the described storing process will reduce, by many times, the amount of media required for recording and archiving the data. For reading the data from the film strip a film scanning device and a decoder may be used. Present generations of film scanners have still better reading parameters and there is no risk of non-compatibility between the hardware and the medium, as in the case of archiving on magnetic media.

Using the method for storing data for archiving purpose, for example, documents related to employing employees, where the period of storing such data, due to law regulations, is 50 years, will reduce the amount of used film media from 100 to 4000 times when comparing to the analog method of recording the data on the film strip in a form of microfilms. This depends on the digital format of the stored documents. An extreme case is storing unformatted text, for example as a typescript. For example, 1 page of a typescript, occupying 1 film frame in the analog form, occupies c.a. 2000 bytes in the digital form. Using an assumed volume of a single frame, presently about 13 MB, and using the error correction mechanisms along with the storing redundancy, it is possible to locate over 4000 pages of a typescript on a single film frame.

Another example of using the method according to the invention is storing, in a digital form, restored photographs and movies. In the case of digitalization of analog images a loss of quality occurs related to the analog-digital conversion. The process of restoring old photographs or movies involves the digitalization of the original image, the reconstruction treatment, and recording the restored image again in an analog form. However, a subsequent digitalization, for example in order to publish in media, involves a loss of quality of details. Storing and archiving with the use of the method according to the present invention will make it possible to publish the images even after many years without losing the quality.

The invention will be explained in more detail in reference to an exemplary embodiment that is shown in the drawings, in which:

- Figure 1 shows a known microfilm with recorded data in an analog form;
- Figure 2 shows a known scheme of coding a color image onto a black and white film strip according to the Point.360 Digital Film Labs technology;
- Figure 3 shows a data block of a resolution of 2 pixels, stored according to the invention;
- Figure 4 shows a data block of a resolution of 3 pixels, stored according to the invention;
- Figure 5 shows a data block of a resolution of 4 pixels, stored according to the invention;
- Figure 6 shows a data block of a resolution of 5 pixels, stored according to the invention;
- Figure 7 shows a data block of a resolution of 6 pixels, stored according to the invention;
- Figure 8 shows a data block of a resolution of 7 pixels, stored according to the invention; and
- Figure 9 shows a part of a table with first 32 values of the data (out of 1024 values), and the verification values along with the corresponding gray levels;
- Figure 10 shows an arrangement of the metadata in a frame defined as "4K+ Type";
- Figure 11 shows an order of placing data within the imaging region of the film frame;
- Figure 12 shows an effect of an encoded segment of data according to the method with the use of a block of a resolution of nine pixels in an arrangement of 3 x 3 pixels;
- Figure 13 shows a segment of stored data utilizing a block of a resolution of sixteen pixels in an arrangement of 4 x 4 pixels; and
- Figure 14 shows a single frame with recorded data and metadata.

It should be emphasized, however, that the examples described below are not to limit the scope of the invention, and rather illustrate one of many possible applications of the present invention.

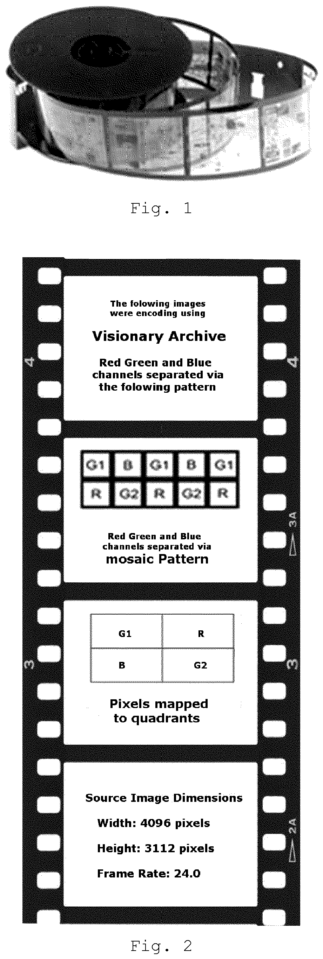

The image recorded on the film strip shown for example in Fig. 1 is, by definition, an analog image. Because both the writing process as well as the reading process suffer from the risk of non-uniqueness of the representation, a method for reading correction is proposed in order to protect against the adverse effect of data degradation during the storing process. For this purpose the proposed method employs the data as well as verifying bits. It is essential to select such parameters of the verifying procedure that will guarantee the uniqueness of decoding. The storing format according to the invention is based on transcoding bytes of electronic data to the graphical form with the use of a predefined algorithm. The set of data occurring in the graphical form is then exposed onto a film strip sequentially in rows. Figure 2 shows the prior art coding scheme for a color image onto a black and white film strip in the Point.360 Digital Film Labs technology.

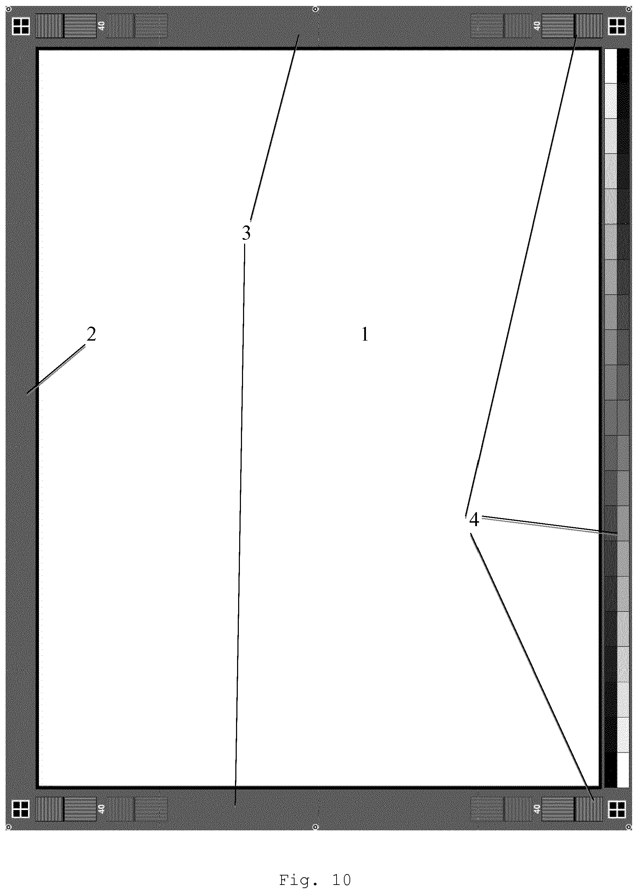

In the method according to the invention the volume of the frame is configured depending on the parameters selected in the project. The parameters of the algorithm are: image resolution, bit depth, and ECC coding. The screen resolution parameter is predefined in advance for individual users in reference to the apparatus they have for exposing the film strip, such that, for example, a laser imagesetter or a film printer. In an embodiment, for imaging the film strip, the base resolution of the recorded material is 4K, i.e., such a resolution that has 4096 pixels in a horizontal line. The field of the exposed image has dimensions 4096 x 3112 points, defining an imaging region 1 illustrated in Fig. 10 further in this description. This is a frame size displayed by imaging devices, for example image projectors. Beyond the field, that is visible for the imaging devices, there is a region of the film that can be exposed by the imagesetter and read by scanners of a size of so called "archival" frame. Then, the resolution that is possible to expose equals 4588 x 3484 pixels. Such a resolution is called 4K+. Next parameter is the data block size. A data block has a shape of a field of side x, where x is the block size parameter. Asymmetrical shape of filling the block makes it possible to apply an error correction algorithm and to define an appropriate algorithm that allows to check the correctness of reading the block basing on complementary values. These algorithms will be described later.

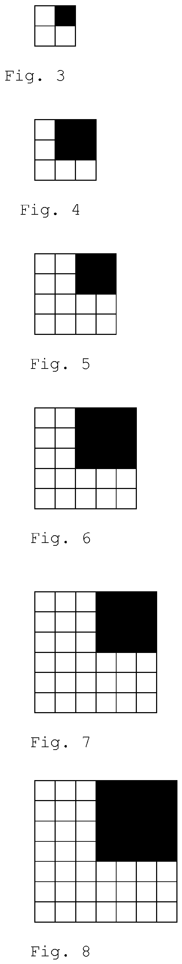

The smallest data block is the block shown in Fig. 3 and having four pixels distributed in two rows and two columns, out of which 3 pixels are the data medium and the fourth one is the medium verifying the data. Figs. 3 to 8 show different examples of pixel arrangements with specified data blocks, wherein in all cases the white fields denote the data medium and the black fields denote the data-verifying medium. Fig. 4 shows an example of a data block of a size of nine pixels, wherein five pixels are the data medium and four pixels are the data-verifying medium. The pixels being the data medium constitute the first column from the left and the last third row from the bottom, whereas the pixels being the data-verifying medium are located in the remaining fields of the block. Fig. 5 shows a data block of a size of sixteen pixels, wherein twelve pixels are the data medium and four pixels are the data-verifying medium. The pixels being the data medium constitute the first column and second column from the left and the last row and last but one row from the bottom, whereas the pixels being the data-verifying medium are located in the remaining four fields of the block. Fig. 6 shows a data block of a size of twenty-five pixels, wherein sixteen pixels are the data medium and the remaining nine pixels are the data-verifying medium. The pixels being the data medium constitute the first column and second column from the left and the last row and last but one row from the bottom, whereas the pixels being the data-verifying medium are located in the remaining nine fields of the block. Fig. 7 shows a data block of a size of thirty-six pixels, wherein twenty-seven pixels are the data medium and nine pixels are the data-verifying medium. The pixels being the data medium constitute the first, second, and third columns from the left and the last three rows from the bottom, whereas the pixels being the data-verifying medium are located in the remaining nine fields of the block. Fig. 8 shows a data block of a size of forty-nine pixels, wherein thirty-three pixels are the data medium and sixteen pixels are the data-verifying medium. The pixels being the data medium constitute the first three columns from the left and the last three rows from the bottom, whereas the pixels being the data-verifying medium are located in the remaining sixteen fields of the block.

The next parameter is the bit depth, or the grayscale depth, being a parameter of a digital image that denotes the number of gray shades that are possible to obtain in the image. In the case of writing and reading devices, this parameter denotes physical properties of the device and the scale the device is able to represent. The parameter defines how many bits in the memory have been assigned to every pixel for recording the information corresponding to the image shade. The higher the number of bits, the bigger the grayscale and thus the bigger the volume of the information medium. For a 1-bit depth a single bit is assigned to every pixel of the image. Every pixel gets one out of two colors - usually white or black, and an image is then obtained of a uniform color depth, i.e., a line-type image. However, due to the data verification a gray shade is used that is different by at least one from the black and white. For a 2-bit depth two bits are dedicated to each pixel which can have one out of four gray shades. For a 4-bit depth each pixel has four bits and therefore it can have one out of sixteen gray shades. For an 8-bit depth eight bits are assigned to each pixel and, as a consequence, it may have one out of two hundred fifty-six gray shades: from the white through the gray shades to the black. This creates a so-called grayscale image, where 8-bit images are written in the Grayscale mode. Similarly, a 10-bit depth denotes assigning ten bits to each pixel that can have one out of one thousand twenty-four gray shades: from the white through the gray shades to the black. A 10-bit depth is the native format for the tests of the imagesetter used in implementing the method according to the invention and for data archiving. The 10-bit depth has been assumed to be the boundary depth for the use in the digital recording of data on the film strip. However, the invention is not limited to the above depths and it can implement a 16-bit depth as well, written in sixteen bits and enabling to encode 65536 gray levels.

The algorithm of the error correction and determining an appropriate algorithm that enables to verify the correctness of reading a given block basing on complementary values is as follows. The input data, in zero-one form, is divided into bit blocks corresponding to the bit depth parameter. For each bit block a numerical value of the corresponding black level of the image is computed. This value corresponds to a bit block value and is represented in a binary form. In order to ensure the uniqueness of the reading, a verification value is computed basing on the data value. The distance, in the grayscale, of the check bit for the neighboring data bits is the square root of all possible values, i.e., for example for the 10-bit depth coding, where 1024 values are possible, the distance of the verification value for the neighboring data values is 32, whereas for data of a difference of two levels, the distance of the correction bits is 64. It is convenient to generalize this relation in a form of an expression defining the verification value for an n-bit coding for a value of data equal to *val:*

$$n10 - val * sqr(n10) \ modulo \ (n10+1)$$

where *n10* is the biggest natural number in the decimal system written in n bits.

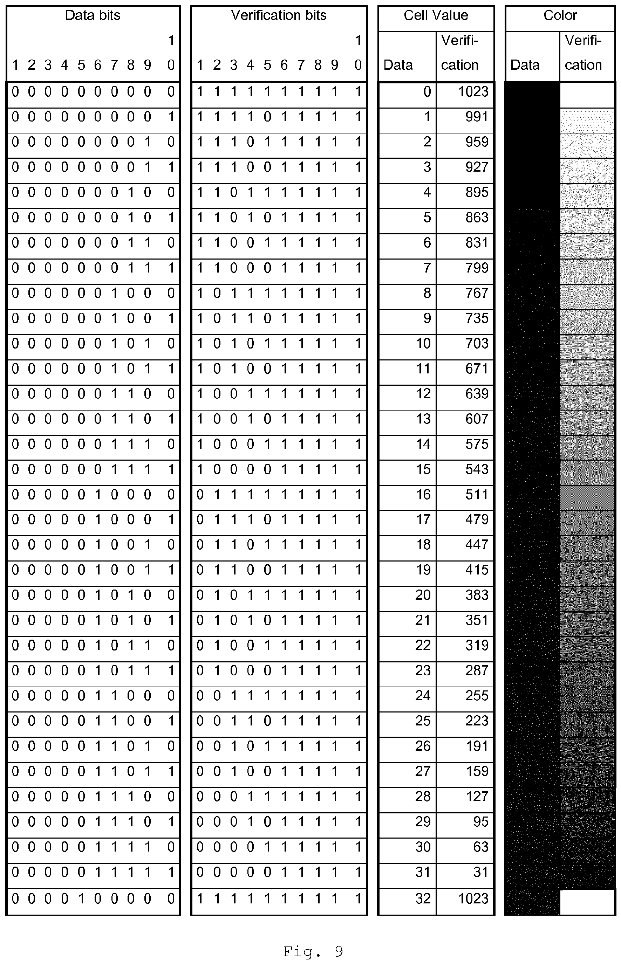

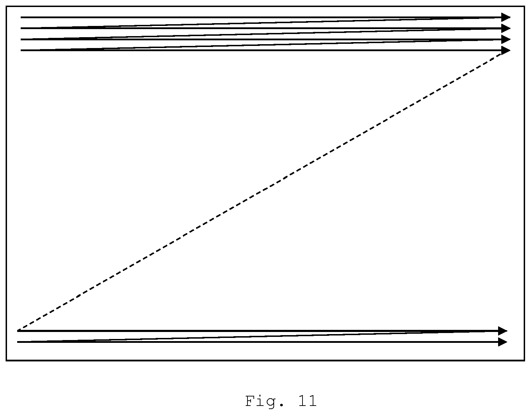

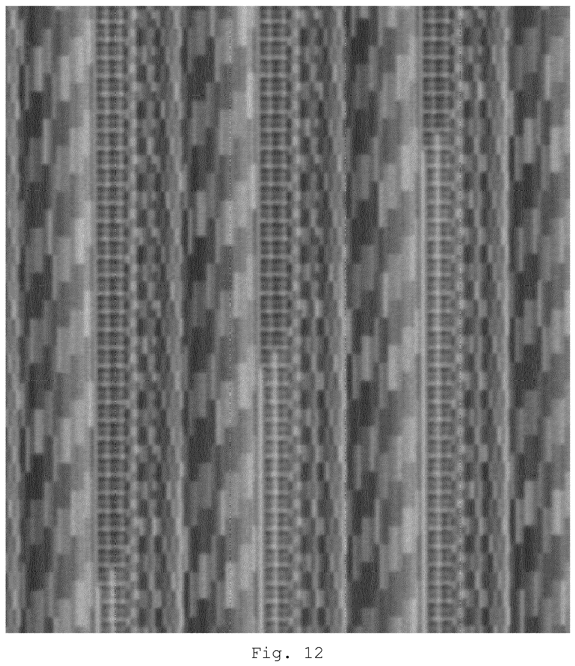

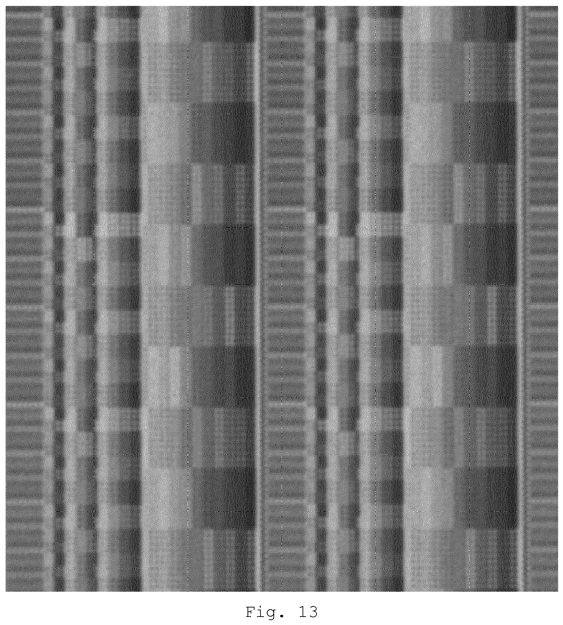

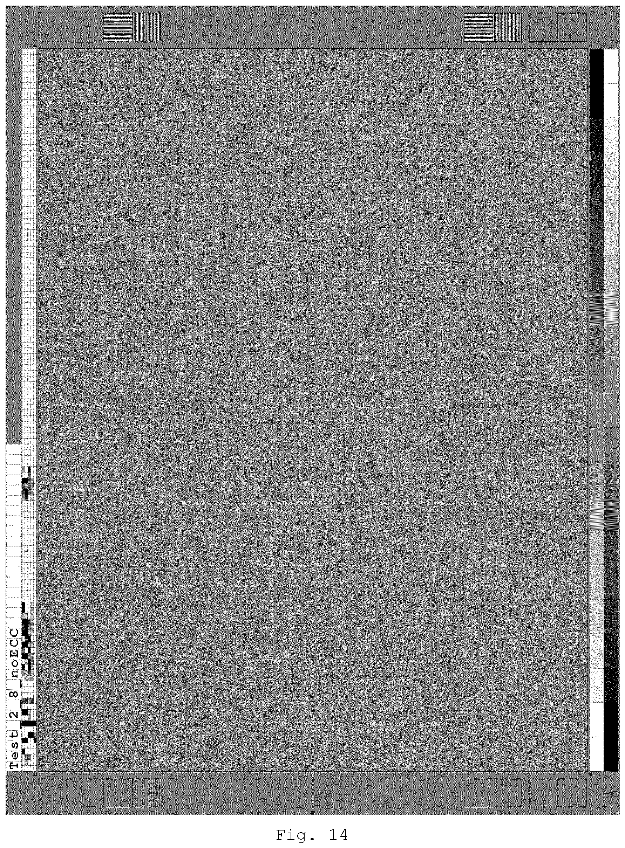

For example, for *n* = 2, the value of *n10* is 3, corresponding to a value of 11 in the binary system, for n = 8, the value of *n10* is 255, corresponding to a value of 11111111 in the binary system. Fig. 9 shows a segment of a table showing the first 32 values of data (out of 1024) along with the verification values, and also the corresponding gray levels. Apart from the process of verifying individual data blocks by using the redundant coding of individual data blocks, the digital storing format itself has been designed so as to apply a further security level by recording redundant data in the film frame. For this purpose algorithms have been employed that are used for the data transmission error correction ECC. This makes it possible to obtain a full or partial correction of errors resulting from interference. The correction coding is then used in the cases, when a retransmission is costly, troublesome or impossible, for example because of time limitations. The ECC correction is successfully employed in particular for cellular communications systems. In the case of writing data on a film strip the benefits from using this type of correction are analogical. A written data series may be compared to a single transmission of a signal, without the possibility of its repeating. Due to the existing methods of using film strips, it was impossible to apply correction codes with the analog data recording. The method according to the invention employs the correction codes for verifying data recorded on the film strip by including a sufficient redundancy of the information together with each transmitted data block, so as to allow the receiver to deduce the transmitted character. Basing on theoretical tests and studies, a known error correction system BCH has been chosen for the method according to the invention. Then, the input data are divided into segments corresponding to subsequent frames of the film strip. Individual film frames contain the constant portion of the project, metadata, and the data fields, as illustrated in Fig. 10. Data are placed in subsequent rows starting from the upper left corner of the frame till the lower right corner, as illustrated in Fig. 11. The field extending beyond the imaging region 1 is used to place the metadata related to the parameters of the data recorded in the film frame, and to characters enabling to carry out the optimal exposure along with the photochemical process. They comprise such elements as a gray scale and markers. In this region also a set of data is placed that is readable without using any algorithms, i.e., data written as an explicit text. The specification of the writing format does not limit the way the elements may be arranged. Without departure from the scope of the present invention, it is possible to arrange these elements in another manner, for example implementing different size of the data field. Each of such a field declaration is designated as a "frame", and additionally a definition of coordinates how to read the parameters of a given frame may be placed on the exposed film material as a frame of additional data located in an information field. In the method according to the present invention the frames are created that contain, among others, data about the project in a text form. Fig. 10 shows an information data arrangement extending beyond the imaging region 1 in the case of a "4K+" - type frame. The reference number 2 denotes a metadata field. The reference number 3 denotes regions that are used for the extra data, and the reference number 4 denotes data assisting the exposure and the photochemical process. In the field 2 there are located a crossmark, i.e., a sight cross, the color scale, and a marker describing the type of the film i.e. whether it is positive or negative. In the field 3, the following parameters are placed: data defining the source file, frame resolution, data block size, data block density, ECC correction data, ECC block size, number of the redundant bits, filename, and an information field. The set of data 4 assisting the exposure and the photochemical process comprises a graphic field and a comment in a binary field. The lower frame margin has two strips containing twenty-one regions of defined gray levels. It is a so-called gray scale used for calibrating the photochemical process, and in particular for developing the photosensitive material. In the course of this process parameters are controlled in order do obtain appropriate saturation and contrast. The upper frame margin is used for placing metadata 2 related to digital data information. The margin is divided in a vertical pane. The upper field is used for writing an explicit text, and the lower one is used for coding binary data. Such an arrangement protects the binary data against scanning an incomplete region of the frame. The explicit text may be read without scanning, with the use of a magnifying glass, and the binary data may be read using a software. Exemplary results of writing a digital data representation implementing the method according to the invention are illustrated in Figures 12, 13, and 14. Fig. 12 shows a result of an encoded segment of data when using a block of a resolution of nine pixels arranged in three rows and three columns. Fig. 13 illustrates a segment of data written with the use of a block of a resolution of sixteen pixels arranged in four rows and four columns. Fig. 14, in turn, illustrates a single frame with written data and metadata presented explicitly.

In one embodiment of the method according to the invention that is best adapted to large projects containing several hundreds or thousands of film frames, it is possible to add to the project, with some interval (for example in a form of selected frames), frames with information data containing parameters written in an explicit text, as illustrated in Fig. 14, and also an analogue image of selected frames. The fields of the side margins, left and right, are used for defining other data envisaged for encoding archival data, for example information data related to tintcoloring or sound. The method of recording these data will not be described here since it belongs to other inventive solutions. The information data are written in blocks of 32 x 86 points divided into five regions. Each of these regions is filled with one out of four gray levels, 0%, 33%, 66%, 100%, respectively, i.e. each block enables to write ten bits of data, making it possible to write a number within a range of 0 - 1023. In case of a data that require a higher range of parameters, two subsequent blocks can be assigned, this enabling to write twenty bits of information data, i.e., a number from a range from 0 to 1,048,575.

## Claims

1. A method for storing data on a film strip comprising a step of inserting a digital data representation into an imaging region on each film frame by means of exposing said each film frame, wherein said digital data representation, as a set of pixels, is fixed on said film strip in a form of regions of irregularly distributed silver halide crystals, the digital data representation being obtained by coding the data with the use of predefined patterns, wherein the digital data representation is transformed to a graphic form in which individual pixels are associated with regions of silver halide crystals of the film strip, forming a parameterized imaging matrix format with at least two parameters affecting the number of digital data representations that can be stored in a single film frame, where said transformation comprises a step of defining a resolution parameter that defines the dimensions of the data fields, being portions of the film frame that are visible in imaging devices, and a step of defining a number of gray levels, and then, the digital data representation is divided into blocks, and the blocks are asymmetrically filled in, with user data and redundant data, creating a code combination, by which an asymmetrical exposure shape is obtained, and sequentially, the data blocks of such a shape are exposed on subsequent film frames of the film strip in the imaging region (1), and the film strip may have different resolution parameters and speeds, whereas the redundant data are used in an error correction system for verifying the user data, by computing a verification value that also is placed onto the film strip, this making it possible to check the correctness of the data consistency during writing and reading thereof, and, moreover, the asymmetrical shape of the data block is used for synchronizing particular imaging lines while writing and reading the digital data representation on the film strip, and additionally, a set of metadata (2), a set of additional data (3), and a set of data (4) assisting the exposure and the photochemical process are placed on the film strip beyond the imaging region (1).

2. A method according to claim 1, **characterized in that** a known ECC coding preferably is used in order to preserve the data redundancy.

3. A method according to claim 1, **characterized in that** beyond the imaging region (1) in each film frame data are also exposed that allow reading the parameters, which were used to write the data, without imaging devices.

4. A method according to claim 1, **characterized in that** the set of metadata (2) related to data written in the imaging region (1) is exposed on a film frame above the imaging region (1) of the film strip.

5. A method according to claim 4, **characterized in that** the set of the metadata (2) comprises a crossmark, a color scale, and a positive/negative marker.

6. A method according to claim 1, **characterized in that** the set of the additional data (3) is exposed, preferably, on both sides of the imaging region (1) of the film strip.

7. A method according to claim 6, **characterized in that** the set of the additional data (3) comprises frame resolution, data block size, data block density, ECC correction, ECC block size, number of the redundant bits, filename, and an information field.

8. A method according to claim 1, **characterized in that** the set of the data (4) assisting the exposure and the photochemical process is exposed in the film frame below the imaging region (1) of the film strip or alternatively on both sides of the imaging region (1) of the film strip.

9. A method according to claim 8, **characterized in that** the set of the data (4) assisting the exposure and the photochemical process comprises markers, data explicitly identifying the film frame, and a gray scale that is located below the imaging region (1) in a form of two stripes, each having twenty-one regions of different gray levels, in order to calibrate the photochemical process during developing the photographic material.

10. A method according to claim 1, **characterized in that** the imaging region (1) of the film strip is parameterized and adapted to technical capabilities of the recording devices.

11. A method according to claim 1, **characterized in that** the smallest data block is a block of four pixels, where three pixels are the data medium whereas the fourth one is the medium verifying the data.

12. A method according to claim 1, **characterized in that** the pixels are grouped into data blocks in which the number of pixels in a row is equal to the number of pixels located in a column.

**Patentansprüche**

1. Verfahren zum Speichern von Daten auf einem Filmstreifen umfassend einen Schritt des Einführens einer digitalen Datendarstellung in einen Abbildungsbereich auf jedem Filmrahmen durch Belichten jedes Filmrahmens, wobei die digitale Datendarstellung als eine Gruppe von Pixeln auf dem Filmstreifen in einer Form von Bereichen von unregelmäßig verteilten Silberhalogenkristallen fixiert ist,
wobei die digitale Datendarstellung durch Codieren der Daten mit der Verwendung von vorab definierten Mustern erhalten wird, wobei die digitale Datendarstellung in eine Grafikform umgewandelt wird, in welcher einzelne Pixel mit Bereichen von Silberhalogenkristallen des Filmstreifens verknüpft sind, wobei ein parametrisiertes Abbildungsmatrixformat mit mindestens zwei Parametern unter Beeinflussung der Anzahl an digitalen Datendarstellungen, die in einem einzigen Filmrahmen gespeichert werden können, gebildet wird, wobei die Umwandlung einen Schritt des Definierens eines Auflösungsparameters, der die Abmessungen der Datenfelder definiert, die Teile des Filmrahmens sind, die in Abbildungsvorrichtungen sichtbar sind, und einen Schritt des Definierens einer Anzahl an Graustufen umfasst, und dann die digitale Datendarstellung in Blöcke unterteilt wird und die Blöcke asymmetrisch mit Nutzerdaten und redundanten Daten gefüllt werden, wobei eine Codekombination erzeugt wird, durch welche eine asymmetrische Belichtungsform erhalten wird, und darauf die Datenblöcke solch einer Form auf darauffolgenden Filmrahmen des Filmstreifens in dem Abbildungsbereich (1) belichtet werden, und der Filmstreifen verschiedene Auflösungsparameter und Geschwindigkeiten aufweisen kann, während die redundanten Daten in einem Fehlerkorrektursystem zum Verifizieren der Nutzerdaten durch Berechnen eines Verifizierungswerts, der auch auf dem Filmstreifen platziert wird, verwendet werden, wodurch dies ermöglicht, die Korrektheit der Datenkonsistenz während dem Schreiben und Lesen davon zu überprüfen, und ferner die asymmetrische Form des Datenblocks zum Synchronisieren bestimmter Abbildungszeilen während dem Schreiben und Lesen der digitalen Datendarstellung auf dem Filmstreifen verwendet wird, und zusätzlich eine Gruppe von Metadaten (2), eine Gruppe von zusätzlichen Daten (3) und eine Gruppe von Daten (4), die die Belichtung und den fotochemischen Prozess unterstützt, auf dem Filmstreifen jenseits des Abbildungsbereichs (1) hinaus platziert werden.

2. Verfahren nach Anspruch 1, **dadurch gekennzeichnet, dass** eine bekannte ECC-Codierung vorzugsweise verwendet wird, um die Datenredundanz beizubehalten.

3. Verfahren nach Anspruch 1, **dadurch gekennzeichnet, dass** jenseits des Abbildungsbereichs (1) in jedem Filmrahmen auch Daten belichtet werden, die ein Lesen der Parameter, welche verwendet wurden, um die Daten zu schreiben, ohne Abbildungsvorrichtungen erlauben.

4. Verfahren nach Anspruch 1, **dadurch gekennzeichnet, dass** die Gruppe von Metadaten (2) bezüglich Daten, die in dem Abbildungsbereich (1) geschrieben werden, auf einem Filmrahmen oberhalb des Abbildungsbereichs (1) des Filmstreifens belichtet wird.

5. Verfahren nach Anspruch 4, **dadurch gekennzeichnet, dass** die Gruppe der Metadaten (2) ein Kreuzzeichen, eine Farbskala und einen positiven/negativen Marker umfasst.

6. Verfahren nach Anspruch 1, **dadurch gekennzeichnet, dass** die Gruppe der zusätzlichen Daten (3) vorzugsweise auf beiden Seiten des Abbildungsbereichs (1) des Filmstreifens belichtet wird.

7. Verfahren nach Anspruch 6, **dadurch gekennzeichnet, dass** die Gruppe der zusätzlichen Daten (3) die Rahmenauflösung, die Datenblockgröße, die Datenblockdichte, die ECC-Korrektur, die ECC-Blockgröße, die Anzahl an redundanten Bits, den Dateinamen und ein Informationsfeld umfasst.

8. Verfahren nach Anspruch 1, **dadurch gekennzeichnet, dass** die Gruppe der Daten (4), die die Belichtung und den fotochemischen Prozess unterstützt, in dem Filmrahmen unterhalb des Abbildungsbereichs (1) des Filmstreifens oder alternativ auf beiden Seiten des Abbildungsbereichs (1) des Filmstreifens belichtet wird.

9. Verfahren nach Anspruch 8, **dadurch gekennzeichnet, dass** die Gruppe der Daten (4), die die Belichtung und den fotochemischen Prozess unterstützt, Marker, Daten, die explizit den Filmrahmen kennzeichnen, und eine Graustufe, die unterhalb des Abbildungsbereichs (1) liegt, in einer Form von zwei Streifen, die jeweils einundzwanzig Bereiche verschiedener Graustufen aufweisen, umfasst, um den fotochemischen Prozess während dem Entwickeln des fotografischen Materials zu kalibrieren.

10. Verfahren nach Anspruch 1, **dadurch gekennzeichnet, dass** der Abbildungsbereich (1) des Filmstreifens parametrisiert und auf technische Fähigkeiten der Aufzeichnungsvorrichtungen angepasst ist.

11. Verfahren nach Anspruch 1, **dadurch gekennzeichnet, dass** der kleinste Datenblock ein Block von vier Pixeln ist, wo drei Pixel das Datenmedium sind, während das vierte das Medium ist, das die Daten verifiziert.

12. Verfahren nach Anspruch 1, **dadurch gekennzeichnet, dass** die Pixel in Datenblöcke gruppiert werden, in welchen die Anzahl an Pixeln in einer Zeile der Anzahl an Pixeln, die in einer Spalte liegen, entspricht.


**Revendications**

1. Procédé de mémorisation de données sur une pellicule de film comprenant une étape d'insertion d'une représentation de données numériques dans une région d'imagerie sur chaque image de film au moyen de l'exposition de chaque image de film, dans lequel ladite représentation de données numériques, comme un ensemble de pixels, est fixée sur ladite pellicule de film sous la forme de régions de cristaux d'halogénure d'argent à répartition irrégulière, la représentation de données numériques étant obtenue en prenant les données en utilisant des modèles prédéfinis, dans lequel la représentation de données numériques est transformée en une forme graphique dans laquelle des pixels individuels sont associés aux régions des cristaux d'halogénure d'argent de la pellicule de film, en un format de matrice d'imagerie paramétrisée avec au moins deux paramètres affectant le nombre de représentations de données numériques qui peuvent être mémorisées dans une image de film unique, où ladite transformation comprend l'étape de définition d'un paramètre de résolution qui définit les dimensions des champs de données, étant des portions de l'image de film qui sont visibles dans des dispositifs d'imagerie et une étape de définition d'un nombre de niveaux de gris, et ensuite la représentation de données numériques est divisée en blocs et les blocs sont remplis asymétriquement avec des données d'utilisateur et des données redondantes, en créant une combinaison de code, par laquelle une forme d'exposition asymétrique est obtenue, et séquentiellement, les blocs de données d'une telle forme sont exposés sur des trames de film successives de la pellicule de film dans la région d'imagerie (1), et la pellicule de film peut avoir deux paramètres de résolution et vitesse différents, alors que les données redondantes sont utilisées dans un système de correction d'erreurs pour vérifier les données d'utilisateur, en calculant informatiquement une valeur de vérification qui est aussi placée sur la pellicule de film en permettant de vérifier l'exactitude de la cohérence des données pendant l'écriture et la lecture de ces dernières, et, en outre, la forme asymétrique du bloc de données est utilisée pour synchroniser des lignes d'imagerie particulière pendant l'écriture et la lecture de la représentation de données numériques sur la pellicule de film, et additionnellement, un ensemble de métadonnées (2), un ensemble de données additionnelles (3) et un ensemble de données (4) assistant l'exposition et le processus photochimique sont placés sur la pellicule de film au-delà de la région d'imagerie (1).

2. Procédé selon la revendication 1, **caractérisé en ce que** un codage ECC connu est de préférence utilisé afin de préserver la redondance de données.

3. Procédé selon la revendication 1, caractérisé en au-delà de la région d'imagerie (1) dans chaque image de film, des données sont aussi exposées qui permettent la lecture de paramètres qui ont été utilisés pour écrire les données, sans dispositifs d'imagerie.

**4.** Procédé selon la revendication 1, caractérisé en l'ensemble de métadonnées (2) relatif aux données écrites dans la région d'imagerie (1) est exposé sur une image de film au-dessus de la région d'imagerie (1) de la pellicule de film.

**5.** Procédé selon la revendication 4, caractérisé en l'ensemble de métadonnées (2) comprend un repère en croix, une échelle de couleurs et un marqueur positif/négatif.

**6.** Procédé selon la revendication 1, caractérisé en l'ensemble de données additionnelles (3), est exposé, de préférence sur les deux côtés de la région d'imagerie (1) de la pellicule de film.

**7.** Procédé selon la revendication 6, caractérisé en l'ensemble de données additionnelles (3) comprend une résolution d'image, une taille de bloc de données, une densité de bloc de données, une correction ECC, une taille de bloc ECC, un nombre de bits redondants, un nom de fichier et un champ d'information.

**8.** Procédé selon la revendication 1, caractérisé en l'ensemble de données (4) assistant l'exposition et le processus photochimique est exposé dans l'image de film au-dessous de la région d'imagerie (1) de la pellicule de film ou alternativement sur les deux côtés de la région d'imagerie (1) de la pellicule de film.

**9.** Procédé selon la revendication 8, **caractérisé en ce que** l'ensemble de données (4) assistant l'exposition et le processus photochimique comprend des marqueurs, des données identifiant explicitement l'image de film et une échelle de gris qui est située au-dessous de la région d'imagerie (1) sous la forme de deux bandes, ayant chacune vingt et une régions de niveaux de gris différents, de manière à étalonner le processus photochimique pendant le développement du matériel photographique.

**10.** Procédé selon la revendication 1, **caractérisé en ce que** la région d'imagerie (1) de la pellicule de film est paramétrisée et adaptée aux capacités techniques des dispositifs d'enregistrement.

**11.** Procédé selon la revendication 1, **caractérisé en ce que** le plus petit bloc de données est un bloc de quatre pixels, où trois pixels sont les supports de données alors que le quatrième est le support vérifiant les données.

**12.** Procédé selon la revendication 1, **caractérisé en ce que** les pixels sont groupés en blocs de données dans lesquels le nombre de pixels dans une rangée est égal au nombre de pixels situés dans une colonne.

Fig. 1

Fig. 2

Fig. 3

Fig. 4

Fig. 5

Fig. 6

Fig. 7

Fig. 8

| Data bits<br>1 2 3 4 5 6 7 8 9 10 | Verification bits<br>1 2 3 4 5 6 7 8 9 10 | Cell Value<br>Data | Verifi-cation | Color Data | Color Verifi-cation |
|---|---|---|---|---|---|
| 0 0 0 0 0 0 0 0 0 0 | 1 1 1 1 1 1 1 1 1 1 | 0 | 1023 | | |
| 0 0 0 0 0 0 0 0 0 1 | 1 1 1 1 0 1 1 1 1 1 | 1 | 991 | | |
| 0 0 0 0 0 0 0 0 1 0 | 1 1 1 0 1 1 1 1 1 1 | 2 | 959 | | |
| 0 0 0 0 0 0 0 0 1 1 | 1 1 1 0 0 1 1 1 1 1 | 3 | 927 | | |
| 0 0 0 0 0 0 0 1 0 0 | 1 1 0 1 1 1 1 1 1 1 | 4 | 895 | | |
| 0 0 0 0 0 0 0 1 0 1 | 1 1 0 1 0 1 1 1 1 1 | 5 | 863 | | |
| 0 0 0 0 0 0 0 1 1 0 | 1 1 0 0 1 1 1 1 1 1 | 6 | 831 | | |
| 0 0 0 0 0 0 0 1 1 1 | 1 1 0 0 0 1 1 1 1 1 | 7 | 799 | | |
| 0 0 0 0 0 0 1 0 0 0 | 1 0 1 1 1 1 1 1 1 1 | 8 | 767 | | |
| 0 0 0 0 0 0 1 0 0 1 | 1 0 1 1 0 1 1 1 1 1 | 9 | 735 | | |
| 0 0 0 0 0 0 1 0 1 0 | 1 0 1 0 1 1 1 1 1 1 | 10 | 703 | | |
| 0 0 0 0 0 0 1 0 1 1 | 1 0 1 0 0 1 1 1 1 1 | 11 | 671 | | |
| 0 0 0 0 0 0 1 1 0 0 | 1 0 0 1 1 1 1 1 1 1 | 12 | 639 | | |
| 0 0 0 0 0 0 1 1 0 1 | 1 0 0 1 0 1 1 1 1 1 | 13 | 607 | | |
| 0 0 0 0 0 0 1 1 1 0 | 1 0 0 0 1 1 1 1 1 1 | 14 | 575 | | |
| 0 0 0 0 0 0 1 1 1 1 | 1 0 0 0 0 1 1 1 1 1 | 15 | 543 | | |
| 0 0 0 0 0 1 0 0 0 0 | 0 1 1 1 1 1 1 1 1 1 | 16 | 511 | | |
| 0 0 0 0 0 1 0 0 0 1 | 0 1 1 1 0 1 1 1 1 1 | 17 | 479 | | |
| 0 0 0 0 0 1 0 0 1 0 | 0 1 1 0 1 1 1 1 1 1 | 18 | 447 | | |
| 0 0 0 0 0 1 0 0 1 1 | 0 1 1 0 0 1 1 1 1 1 | 19 | 415 | | |
| 0 0 0 0 0 1 0 1 0 0 | 0 1 0 1 1 1 1 1 1 1 | 20 | 383 | | |
| 0 0 0 0 0 1 0 1 0 1 | 0 1 0 1 0 1 1 1 1 1 | 21 | 351 | | |
| 0 0 0 0 0 1 0 1 1 0 | 0 1 0 0 1 1 1 1 1 1 | 22 | 319 | | |
| 0 0 0 0 0 1 0 1 1 1 | 0 1 0 0 0 1 1 1 1 1 | 23 | 287 | | |
| 0 0 0 0 0 1 1 0 0 0 | 0 0 1 1 1 1 1 1 1 1 | 24 | 255 | | |
| 0 0 0 0 0 1 1 0 0 1 | 0 0 1 1 0 1 1 1 1 1 | 25 | 223 | | |
| 0 0 0 0 0 1 1 0 1 0 | 0 0 1 0 1 1 1 1 1 1 | 26 | 191 | | |
| 0 0 0 0 0 1 1 0 1 1 | 0 0 1 0 0 1 1 1 1 1 | 27 | 159 | | |
| 0 0 0 0 0 1 1 1 0 0 | 0 0 0 1 1 1 1 1 1 1 | 28 | 127 | | |
| 0 0 0 0 0 1 1 1 0 1 | 0 0 0 1 0 1 1 1 1 1 | 29 | 95 | | |
| 0 0 0 0 0 1 1 1 1 0 | 0 0 0 0 1 1 1 1 1 1 | 30 | 63 | | |
| 0 0 0 0 0 1 1 1 1 1 | 0 0 0 0 0 1 1 1 1 1 | 31 | 31 | | |
| 0 0 0 0 1 0 0 0 0 0 | 1 1 1 1 1 1 1 1 1 1 | 32 | 1023 | | |

Fig. 9

Fig. 10

Fig. 11

Fig. 12

Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5751505 A
- US 6229659 B
- US 20100180180 A
- WO 2004114655 A